# EUROPEAN PATENT APPLICATION

(11) **EP 4 492 547 A1**
(43) Date of publication of application: **15.01.2025**
(21) Application number: 22930887.9
(22) Date of filing: 11.03.2022
(51) Int. Cl.: H01M 50/202

(54) **BATTERY HOUSING STRUCTURE**

(71) Applicant: Bsize Inc., Yokohama-shi, Kanagawa, 222-0033 (JP)
(72) Inventor: YAGI Keita, Yokohama-shi, Kanagawa 222-0033 (JP)
(74) Representative: EIP
(86) International application number: PCT/JP2022/010834
(87) International publication number: WO 2023/170906

(57) **Abstract**

A battery housing structure capable of more effectively detecting expansion of a battery is provided.

A battery housing structure according to the present invention includes a housing body of a battery, and the housing body has different ease of deformation with respect to expansion of the battery on a first main surface side of the battery and on a second main surface side of the battery.

## Description

### Technical Field

The present invention relates to a battery housing structure.

### Background Art

Since a secondary battery such as a lithium ion battery can be repeatedly used by charging and is highly convenient, the secondary battery is used in a wide range of fields such as a vehicle field, a communication field, an industrial field, a construction field, renewable energy, and portable equipment. However, in the secondary battery, an electrolytic solution is gasified due to deterioration of a material or the like used inside, and expansion occurs. As described above, when the secondary battery expands due to deterioration, leakage of the electrolytic solution or ignition may occur. For this reason, expansion of the secondary battery is detected.

For example, in the conventional invention, it is proposed that a substantially rectangular main surface of a surface of the lithium ion battery is attached with four strain gauges for detecting the pressure of the battery surface, and the expansion of the lithium ion battery is detected based on measured values of the attached four strain gauges (see, for example, Patent Literature 1).

### Citation List

### Patent Literature

Patent Literature 1: JP 2019-198765 A

### Summary of Invention

### Technical Problem

However, a method capable of more effectively detecting the expansion of the secondary battery is required.

The present invention has been made to solve the above problems, and an object thereof is to provide a battery housing structure capable of more effectively detecting expansion of a battery.

The present invention has been made in view of the above problems, and an object thereof is to provide a battery housing structure capable of more effectively detecting expansion of a battery.

### Solution to Problem

In order to solve the above problems, a battery housing structure according to the present invention includes a housing body of a battery, and the housing body has different ease of deformation with respect to expansion of the battery on a first main surface side of the battery and on a second main surface side of the battery.

### Advantageous Effects of Invention

According to the present invention, it is possible to provide a battery housing structure capable of more effectively detecting expansion of a battery.

### Brief Description of Drawings

Fig. 1 is a perspective view of a terminal according to an embodiment.
Fig. 2 is a cross-sectional view taken along the line A-A of Fig. 1 of the terminal according to the embodiment.
Fig. 3 is a schematic plane view illustrating the center of a battery cell.
Fig. 4 is a schematic diagram illustrating ease of deformation of a battery housing body.
Fig. 5 is a schematic diagram illustrating ease of deformation of the battery housing body.
Fig. 6 is a diagram illustrating another example of a battery housing structure.
Fig. 7 is a diagram illustrating another example of the battery housing structure.
Fig. 8 is a diagram illustrating another example of the battery housing structure.
Fig. 9 is a diagram illustrating another example of the battery housing structure.
Fig. 10 is a partially enlarged cross-sectional view of another example of the battery housing structure.

### Description of Embodiments

### Embodiment

Hereinafter, a housing structure of a battery (secondary battery) according to an embodiment will be described with reference to the drawings.

The battery housing structure according to the embodiment is a battery housing structure in a terminal carried by a watched person (for example, a child) used in a so-called monitoring system. Note that, in the following description, an example in which the battery housing structure is applied to the terminal used in the monitoring system will be described, but the battery housing structure can be applied as long as the battery is housed.

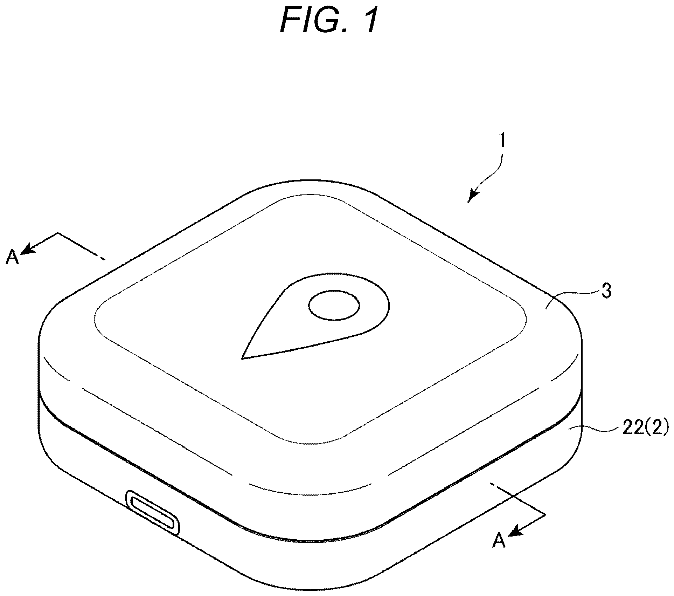

As illustrated in Fig. 1, a terminal 1 has a rounded and substantially cubic shape, and has a configuration in which a cover 3 is covered on a casing 2.

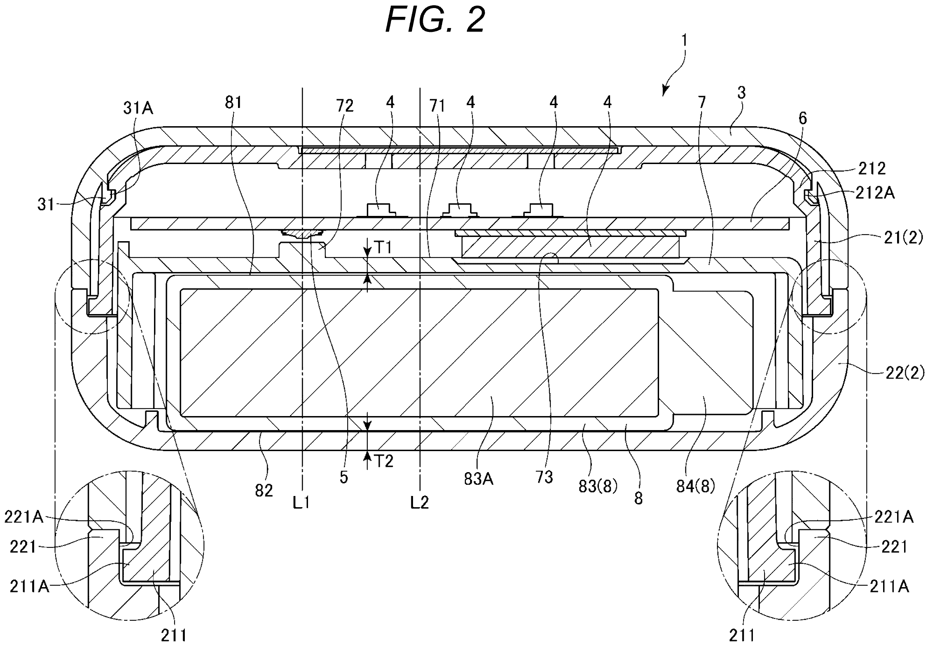

As illustrated in Fig. 2, the casing 2 includes an upper casing 21 and a lower casing 22 (second member). The upper casing 21 has a rim portion 211A formed along an outer peripheral surface of a lower end portion 211. The lower casing 22 has a groove portion 221A formed along an inner peripheral surface of an upper end portion 221. By fitting the rim portion 211A of the upper casing 21 and the groove portion 221A of the lower casing 22, the upper casing 21 and the lower casing 22 are detachably engaged.

Further, the upper casing 21 has a groove portion 212A formed along an outer peripheral surface of an upper end portion 212. The cover 3 has a rim portion 31A formed along an inner peripheral surface of a lower end portion 31. By fitting the groove portion 212A of the upper casing 21 and the rim portion 31A of the cover 3, the upper casing 21 and the cover 3 are detachably engaged. Note that the upper casing 21 and the cover 3 can be attached and detached with a relatively light force.

A main control board 6 (printed circuit board) on which electronic components 4 such as various semiconductor chips, capacitors, and resistors, a detection switch 5, and the like are mounted, a frame 7 (first member), a battery 8 (secondary battery), and the like are housed in the casing including the upper casing 21 and the lower casing 22.

The frame 7 is fixed to the lower casing 22 by a screw (not illustrated) or the like, and the frame 7 and the lower casing 22 constitute a housing body that houses the battery 8. In the present embodiment, the frame 7 is fixed to the lower casing 22 by the screw or the like, but a fixing method is not limited.

The detection switch 5 is a switch that detects contact with the frame 7, and is mounted on the frame 7 side of the main control board 6 existing between the upper casing 21 and the frame 7. That is, the detection switch 5 is provided on the first main surface 81 side of the battery 8. In addition, the terminal 1 has a configuration in which the frame 7 constituting the housing body is interposed between a first main surface 81 of the battery 8 and the detection switch 5 such that the first main surface 81 of the battery 8 and the detection switch 5 are not in direct contact with each other. As described above, the detection switch 5 and the battery 8 are not in direct contact with each other, and the force applied to the battery 8 by contact with the detection switch 5 is dispersed by the frame 7. Therefore, it is possible to prevent the excessive pressure from being applied to the battery 8 due to contact with the detection switch 5, and it is possible to suppress an internal electrolytic solution from leaking due to damages in the exterior of the battery 8. In the example illustrated in Fig. 2, the center (see a center line L1) of the detection switch 5 is provided at a position shifted from the center (see the center line L2) of a battery cell 83A housed in the battery 8. However, the present invention is not limited thereto as long as the detection switch 5 can be mounted on the main control board 6 such that the center of the detection switch 5 is located at a position corresponding to the center of the battery cell 83A housed in the battery 8.

The frame 7 constituting the housing body is provided with a convex portion 72 at a position facing the detection switch 5 on the main surface 71 on the main control board 6 side. The frame 7 constituting the housing body is provided with a concave portion 73 at a position other than the position facing the detection switch 5, specifically, at a position facing the electronic component 4 mounted on the frame 7 side of the main control board 6. The convex portion 72 and the concave portion 73 are provided to prevent the frame 7 from coming into contact with a component (for example, the electronic component 4 mounted on the main control board 6 or the like) other than the detection switch 5 before coming into contact with the detection switch 5 when the battery 8 expands. As described above, by providing the convex portion 72 and the concave portion 73 in the frame 7, the electronic component 4, the main control board 6, the battery 8, and the like can be housed densely in the casing including the upper casing 21 and the lower casing 22, and a space in the casing including the upper casing 21 and the lower casing 22 can be effectively used.

In a case where the battery 8 expands, if the frame 7 does not come into contact with a component (for example, the electronic component 4 mounted on the main control board 6 or the like) other than the detection switch 5 before the frame 7 comes into contact with the detection switch 5, it is not always necessary to provide at least one of the convex portion 72 and the concave portion 73 in the frame 7. The number of concave portions 73 provided in the frame 7 may not be one. Instead of the concave portion 73, an opening slightly larger than the electronic component 4 mounted on the frame 7 side of the main control board 6 may be provided to prevent the frame 7 from coming into contact with a component (for example, the electronic component 4 mounted on the main control board 6 or the like) other than the detection switch 5 before coming into contact with the detection switch 5. The detection switch 5 only needs to be able to detect the contact with the frame 7, and may detect the contact with the frame 7 by any method.

The battery 8 of the present embodiment is a secondary battery such as a lithium ion battery. When the secondary battery is repeatedly charged and discharged, the internal electrolytic solution expands, or gas is generated inside the secondary battery, so that expansion occurs. In addition, when the expansion occurs, the secondary battery is deteriorated and cannot be used. In the present embodiment, such a defect of the battery 8 is detected by the detection switch 5.

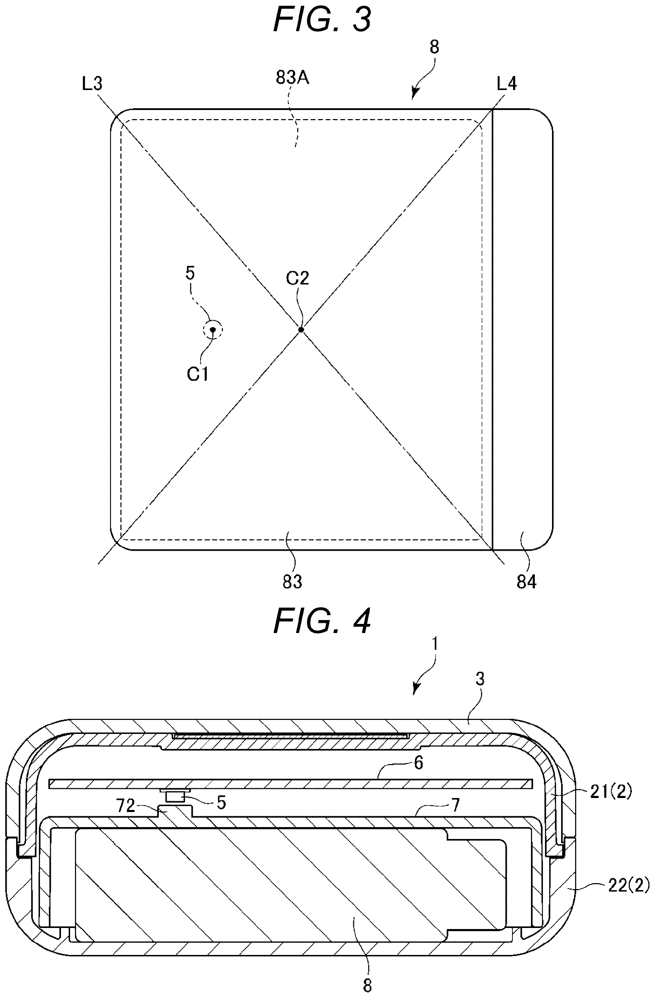

Fig. 3 is a schematic plane view illustrating the center of the battery cell. The battery 8 includes a main portion 83 in which the battery cell 83A is housed and a sub portion 84 in which a control circuit (not illustrated) and the like are housed. As illustrated in Fig. 3, in the battery housing structure according to the present embodiment, a center C1 of the detection switch 5 and a center C2 of the battery cell 83A are shifted from each other in plane view (a projection surface facing the detection switch 5) viewed from the first main surface 81 side of the battery 8. In other words, in plane view viewed from the first main surface 81 side of the battery 8, the center C1 of the detection switch 5 and the center C2 of the battery cell 83A do not overlap each other. In the battery housing structure according to the present embodiment, the center C2 of the battery cell 83A is an intersection of diagonal lines L3 and L4 of the battery cell 83A. Since the battery cell 83A according to the present embodiment has a rectangular shape or a substantially rectangular shape in plane view viewed from the first main surface 81 side, the intersection of the diagonal lines L3 and L4 of the battery cell 83A is set as the center C2 of the battery cell 83A. However, this is not the case when the shape of the battery cell 83A is different in plane view viewed from the first main surface 81 side. For example, when the shape of the battery cell 83A is deformed (for example, a polygon) in plane view viewed from the first main surface 81 side, the geometric center of gravity of the battery cell 83A may be set as the center of the battery 8. In addition, when two or more battery cells 83A are housed in the battery 8, the intersection of the diagonal lines of each battery cell 83A or the geometric center of gravity may be set as the center. In this case, there are two or more centers C2.

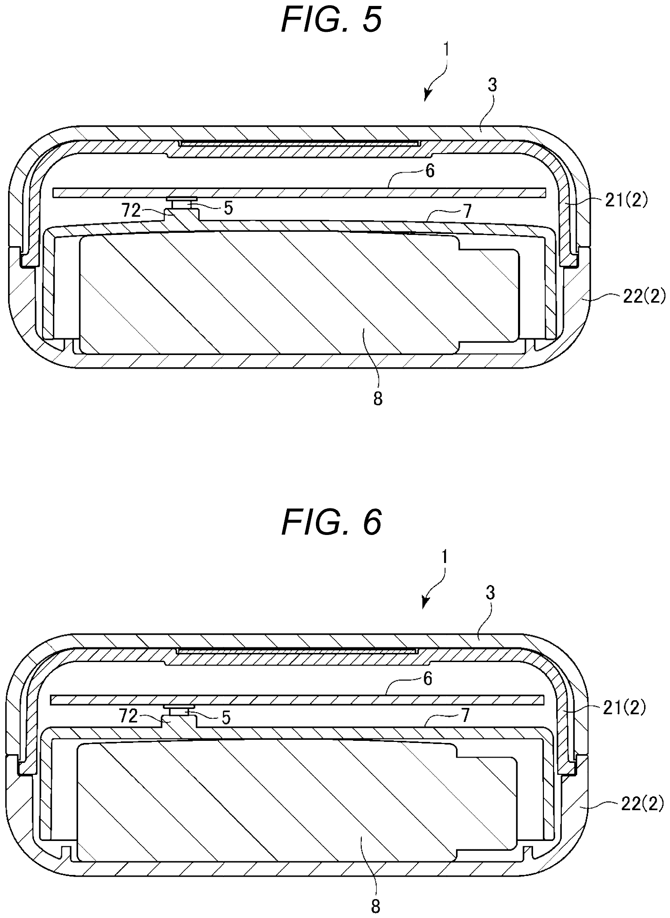

Figs. 4 and 5 (illustration of the battery cell 83A is omitted in Figs. 4 and 5) are schematic diagrams illustrating ease of deformation of the frame 7 and the lower casing 22 constituting the housing body of the battery 8. Fig. 4 is a schematic cross-sectional view of the housing body before the battery 8 expands. Fig. 5 is a schematic cross-sectional view of the housing body after the battery 8 expands. In the terminal 1 of the present embodiment, the frame 7 on the first main surface 81 side of the battery 8 and the lower casing 22 on the second main surface 82 side of the battery 8 are different in ease of deformation with respect to expansion of the battery 8. Specifically, the frame 7 and the lower casing 22 constituting the housing body of the battery 8 have a structure in which the frame 7 on the first main surface 81 side of the battery 8 is more easily deformed than the lower casing 22 on the second main surface 82 side of the battery 8, and as illustrated in Figs. 4 and 5, when the battery 8 expands, the frame 7 deforms more than the lower casing 22.

Here, a method for causing the frame 7 to be more deformable than the lower casing 22 is not limited. For example, by causing the frame 7 and the lower casing 22 to be made of different materials, the frame 7 may be configured to be more easily deformed than the lower casing 22. Further, for example, by changing the thickness T1 of the frame 7 and the thickness T2 of the lower casing 22, the frame 7 may be configured to be more easily deformed than the lower casing 22. Further, for example, by adopting a structure of the frame 7 and the lower casing 22, for example, a structure in which rigidity is improved such as a honeycomb structure in the lower casing 22, the frame 7 may be configured to be more easily deformed than the lower casing 22. Further, for example, by changing at least two of the material, thickness, and structure of the frame 7 and the lower casing 22, the frame 7 may be configured to be more easily deformed than the lower casing 22.

As described above, the battery housing structure according to the present embodiment includes the housing body of the battery including the lower casing 22 and the frame 7, and the housing body has different ease of deformation with respect to expansion of the battery 8 on the first main surface 81 side of the battery 8 and on the second main surface 82 side of the battery 8. For example, the detection switch 5 that detects the expansion of the battery 8 is provided on the first main surface 81 side of the battery 8, and the housing body has a structure in which the first main surface 81 side of the battery 8 is more easily deformed than the second main surface 82 side of the battery 8, so that the expansion of the battery 8 can be guided to the detection switch 5 side, and the expansion of the battery 8 can be effectively detected.

In the battery housing structure according to the present embodiment, the frame 7 (first member) constituting the housing body is interposed between the first main surface 81 of the battery and the detection switch 5 such that the first main surface 81 of the battery 8 and the detection switch 5 are not in direct contact with each other. Therefore, the detection switch 5 and the battery 8 are not in direct contact with each other, and the force applied to the battery 8 due to contact with the detection switch 5 is dispersed by the frame 7. As a result, it is possible to prevent the excessive pressure from being applied to the battery 8 due to contact with the detection switch 5, and it is possible to suppress an internal electrolytic solution from leaking due to damages in the exterior of the battery 8.

In the battery housing structure according to the present embodiment, the detection switch 5 is provided at a position shifted from the center of the battery cell 83A housed in the battery 8. Since the electronic component 4 other than the detection switch 5 is mounted on the main control board 6 on which the detection switch 5 is mounted, it is difficult to provide the detection switch 5 such that the center of the detection switch 5 overlaps the position corresponding to the center of the battery cell 83A that expands most when the battery 8 expands. However, in the battery housing structure according to the present embodiment, even if the detection switch 5 is provided on the main control board 6 such that the center of the detection switch 5 is located at a position shifted from the center of the battery cell 83A, expansion of the battery 8 can be effectively detected.

In the battery housing structure according to the present embodiment, the frame 7 (first member) constituting the housing body is provided with the convex portion 72 at a position facing the detection switch 5. In the battery housing structure according to the present embodiment, the frame 7 (first member) constituting the housing body is provided with the concave portion 73 in at least a part other than the position facing the detection switch 5. By providing at least one of the convex portion 72 and the concave portion 73 in the frame 7 as described above, when the battery 8 expands, it is possible to prevent the frame 7 from coming into contact with a component (for example, the electronic component 4 mounted on the main control board 6 or the like) other than the detection switch 5 before coming into contact with the detection switch 5. In addition, the electronic component 4, the main control board 6, the battery 8, and the like can be housed densely in the casing including the upper casing 21 and the lower casing 22, and a space in the casing including the upper casing 21 and the lower casing 22 can be effectively used. As described above, instead of the concave portion 73, an opening slightly larger than the electronic component 4 mounted on the frame 7 side of the main control board 6 in plane view may be provided to prevent the frame 7 from coming into contact with a component (for example, the electronic component 4 mounted on the main control board 6 or the like) other than the detection switch 5 before coming into contact with the detection switch 5.

In the battery housing structure according to the present embodiment, in the housing body including the lower casing 22 and the frame 7, the first main surface 81 side of the battery 8 and the second main surface 82 side of the battery 8 are made of different members. As described above, the first main surface 81 side of the battery 8 and the second main surface 82 side of the battery 8 are made of different members, for example, the frame 7 is made of a material that is more easily deformed than the lower casing 22, so that the expansion of the battery 8 can be guided to the detection switch 5 side, and the expansion of the

### battery 8 can be effectively detected.

In the battery housing structure according to the present embodiment, the detection switch 5 is provided on the main control board 6 on which the electronic component 4 (device) other than the detection switch 5 is mounted. As described above, by providing the detection switch 5 on the main control board 6 on which the electronic component 4 other than the detection switch 5 is mounted, an increase in cost due to the provision of the detection switch 5 can be suppressed, and the space in the casing including the upper casing 21 and the lower casing 22 can be effectively used.

### Modifications of Embodiment

Hereinafter, modifications of the embodiment will be described with reference to Figs. 6 to 10 (in Figs. 6 to 9, illustration of the battery cell 83A is omitted).

In the above embodiment, the frame 7 is fixed to the lower casing 22, but the frame 7 may be in a state of not being fixed or locked anywhere in the lower casing 22, in other words, the frame 7 may be in a floating state.

In this case, the frame 7 rises following the expansion of the battery 8, but as illustrated in Fig. 6, in the frame 7, a portion (peripheral portion) other than a portion facing the center of the battery cell 83A housed in the battery 8 follows the expansion of the center of the battery cell 83A that expands the most. Therefore, even in a case where the detection switch 5 cannot be provided at a position facing the center of the battery cell 83A, since the peripheral portion of the frame 7 follows the expansion of the center of the battery cell 83A that expands the most, the expansion of the battery 8 can be detected similarly to the case where the detection switch 5 is provided such that the center of the detection switch 5 is located at a position facing the center of the battery cell 83A.

Further, a part of the frame 7 may be fixed or locked to the lower casing 22, in other words, the frame 7 may be brought into a cantilever state.

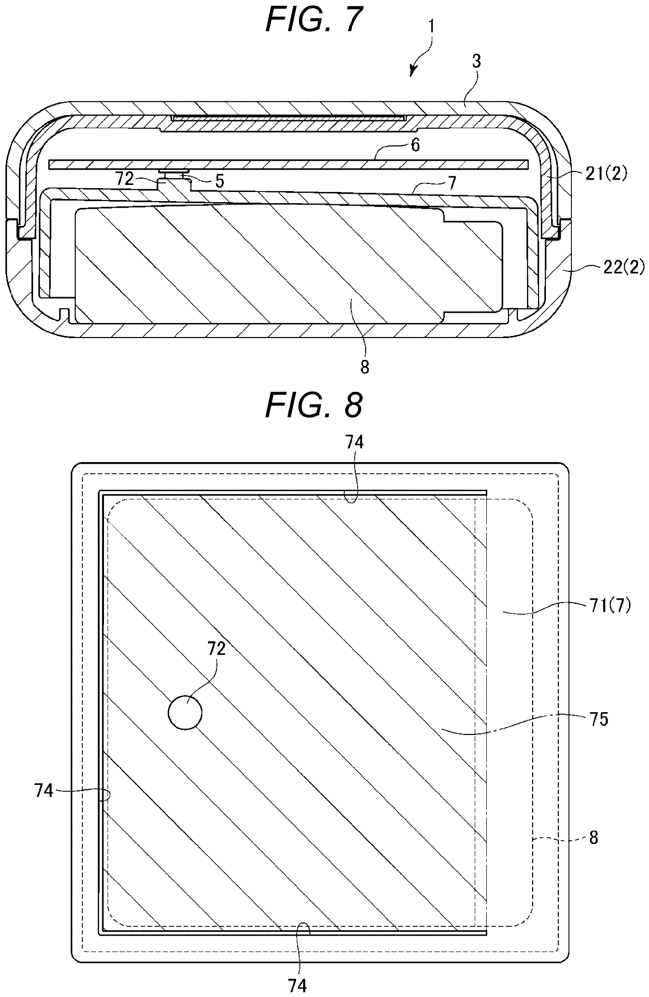

In this case, the frame 7 floats following the expansion of the battery 8 on the side of the frame 7 opposite to the side fixed or locked to the lower casing 22 (in the example illustrated in Fig. 7, the left side of the drawing). At this time, as illustrated in Fig. 7, the side of the frame 7 that is not fixed or locked to the lower casing 22 follows the expansion of the center of the battery cell 83A that expands the most. Therefore, even in a case where the detection switch 5 cannot be provided at a position facing the center of the battery cell 83A, since the side of the frame 7 not fixed or locked to the lower casing 22 follows the expansion of the center of the battery cell 83A that expands the most, the expansion of the battery 8 can be detected similarly to the case where the detection switch 5 is provided such that the center of the detection switch 5 is located at a position facing the center of the battery cell 83A.

Although the frame 7 is fixed or locked to the lower casing 22, an end portion of the frame 7 at a position opposite to the center of the detection switch 5 is preferably fixed or locked to the lower casing 22 with the center of the battery cell 83A as a symmetry point in plane view viewed from the first main surface 81 side of the battery 8.

In addition, a cut hole, an opening, or a slit (hereinafter, referred to as the cut hole and the like 74) may be provided in at least a part other than a predetermined region facing the center of the battery cell 83A housed in the battery 8 of the frame 7 constituting the housing body. In the example illustrated in Fig. 8, the cut hole and the like 74 provided in the frame 7 are provided in a U shape so as to surround the detection switch 5 in plane view, but are not necessarily provided in the U shape. The cut hole and the like 74 provided in the frame 7 are preferably provided in at least two directions of a predetermined region facing the detection switch 5.

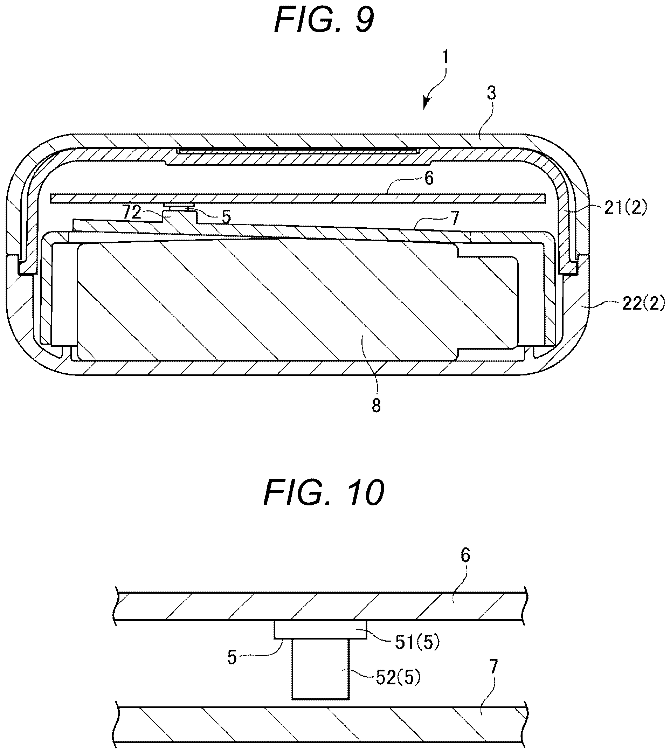

By providing the cut hole and the like 74 in the frame 7 as described above, even if the frame 7 is not in a floating state, a region 75 surrounded by the cut hole and the like 74 is more likely to be displaced with respect to the pressure from the battery cell 83A side as compared with a region other than the region 75 of the frame 7. Therefore, as illustrated in Fig. 9, the region 75 surrounded by the cut hole and the like 74 of the frame 7 follows the expansion of the center of the battery cell 83A that expands most. For this reason, even in a case where the detection switch 5 cannot be provided at the position facing the center of the battery cell 83A, the region 75 surrounded by the cut hole and the like 74 of the frame 7 follows the expansion of the center of the battery cell 83A that expands the most. Therefore, the expansion of the battery 8 can be detected similarly to the case where the detection switch 5 is provided such that the center of the detection switch 5 is located at the position facing the center of the battery cell 83A.

As described above, in the battery housing structure according to the modification of the present embodiment, the frame 7 (first member) constituting the housing body is in a floating state of being not fixed or locked. Therefore, since the peripheral portion of the frame 7 follows the expansion of the center of the battery cell 83A that expands the most, the expansion of the battery 8 can be detected similarly to the case where the detection switch 5 is provided at a position facing the center of the battery cell 83A.

Further, in the battery housing structure according to the modification of the present embodiment, the frame 7 (first member) constituting the housing body is provided with the cut hole and the like 74 in at least a part other than the predetermined region facing the center of the battery cell 83A housed in the battery 8. Therefore, since the region 75 surrounded by the cut hole and the like 74 of the frame 7 follows the expansion of the center of the battery cell 83A that expands the most, the expansion of the battery 8 can be detected similarly to the case where the detection switch 5 is provided such that the center of the detection switch 5 is located at a position facing the center of the battery cell 83A.

Further, in the battery housing structure according to the modification of the present embodiment, the cut hole and the like 74 provided in the frame 7 (first member) are provided in at least two directions of the predetermined region facing the detection switch 5. By providing the cut hole and the like 74 in at least two directions of the predetermined region facing the detection switch 5, it is possible to more reliably follow the expansion of the center of the battery cell 83A.

Further, in the battery housing structure according to the present embodiment, when the battery 8 expands, the convex portion 72 is provided on the frame 7 to prevent the frame 7 from coming into contact with a component (for example, the electronic component 4 mounted on the main control board 6 or the like) other than the detection switch 5 before coming into contact with the detection switch 5. However, as illustrated in Fig. 10, the convex portion 72 may not be provided on the frame 7, and a rod-shaped switch module 52 may be provided on a base portion 51 to extend the detection switch 5 (for example, a tactile switch or the like may be used). In addition, the frame 7 may be provided with the convex portion 72, and the switch module 52 of the detection switch 5 may be extended.

In addition, each of the above embodiments is merely an example of implementation in implementing the present invention, and the technical scope of the present invention should not be interpreted in a limited manner. That is, the present invention can be implemented in various forms without departing from the gist or main features thereof.

### Reference Signs List

1 Terminal
2 Casing
3 Cover
4 Electronic component
5 Detection switch
6 Main control board
7 Frame (first member)
8 Battery (secondary battery)
21 Upper casing
22 Lower casing (second member)
31 Lower end portion
31A Rim portion
51 Base portion
52 Switch module
71 Main surface
72 Convex portion
73 Concave portion
74 Cut hole and like
75 Region
81 First main surface
82 Second main surface
83 Main portion
83A Battery cell
84 Sub portion
211 Lower end portion
211A Rim portion
212 Upper end portion
212A Groove portion
221 Upper end portion
221A Groove portion
T1 Thickness
T2 Thickness

## Claims

1. A battery housing structure comprising:
a housing body of a battery, wherein
the housing body has
different ease of deformation with respect to expansion of the battery on a first main surface side of the battery and on a second main surface side of the battery.

2. The battery housing structure according to claim 1, wherein
a detection switch that detects expansion of the battery is provided on the first main surface side of the battery, and
in the housing body,
the first main surface side of the battery is more easily deformed than the second main surface side of the battery.

3. The battery housing structure according to claim 2, wherein
a first member constituting the housing body is interposed between a first main surface of the battery and the detection switch such that the first main surface of the battery and the detection switch are not in direct contact with each other.

4. The battery housing structure according to claim 3, wherein
the first member is
provided with a convex portion at a position facing the detection switch.

5. The battery housing structure according to claim 3, wherein
the first member is
provided with a concave portion or an opening in at least a part other than a position facing the detection switch.

6. The battery housing structure according to claim 1, wherein
the housing body is
made of different members on the first main surface side of the battery and on the second main surface side of the battery.

7. The battery housing structure according to claim 3, wherein
the housing body includes
the first member and a second member provided on the second main surface side of the battery, and
the first member is
in a floating state of being not fixed or locked to the second member.

8. The battery housing structure according to claim 3, wherein
the housing body includes
the first member and a second member provided on the second main surface side of the battery, and
a part of the first member is fixed or locked to the second member.

9. The battery housing structure according to claim 3, wherein
the first member is
provided with a cut hole, an opening, or a slit in at least a part of the first main surface side of the battery.

10. The battery housing structure according to claim 9, wherein
the cut hole provided in the first member is provided in at least two directions of a predetermined region facing the detection switch.

11. The battery housing structure according to claim 2, wherein
the detection switch is
provided on a substrate on which a device other than the detection switch is mounted.

12. The battery housing structure according to claim 11, wherein
the second main surface side of the battery of the housing body is
made of at least a part of a casing that houses the detection switch and the substrate.

13. The battery housing structure according to claim 3, wherein
the detection switch is
provided at a position shifted from a center of a battery cell housed in the battery.
